# EUROPEAN PATENT SPECIFICATION

(11) **EP 2 428 884 B1**
(45) Date of publication and mention of the grant of the patent: **28.08.2019**
(21) Application number: 11180005.8
(22) Date of filing: 05.09.2011
(51) Int. Cl.: G06F 3/0482, G06F 16/904

(54) **Method, software, and apparatus for displaying data objects**
Verfahren, Software und Vorrichtung zur Anzeige von Datenobjekten
Procédé, logiciel et appareil d'affichage d'objets de données

(30) Priority: 10.09.2010 KR 20100088988
(43) Date of publication of application: 14.03.2012
(73) Proprietor: Samsung Electronics Co., Ltd., Suwon-si, Gyeonggi-do, 443-742 (KR)
(72) Inventor: Park, Sun-min, Seoul (KR); Shim, Hyo-sun, Gyeonggi-do (KR); Kim, Dae-hyun, Gyeonggi-do (KR); Jung, Ji-woon, Gyeonggi-do (KR); Jang, Won-chang, Seoul (KR)
(74) Representative: HGF Limited

(56) References cited:
- US-A1- 2006 212 833
- US-A1- 2007 270 985

## Description

### TECHNICAL FIELD OF THE INVENTION

One or more aspects of the present invention relate to display methods, and more particularly, to a method, apparatus, and software for displaying data objects.

### BACKGROUND OF THE INVENTION

Generally, image-based data objects, such as still images and moving pictures, and text-based data objects, may be displayed in the order that they have been stored in a device, such as a computer, wireless communication device, personal digital assistant (PDA), or the like. However, the relatively large storage capacity of these devices have enabled the storage of correspondingly large amounts of data objects.

US 2006/212833 discloses a method of displaying a hierarchical file structure. The method determines a visual arrangement of containers which reflects a hierarchical relationship of the file structure. A concentric curved shape is then formed representing each container in the file structure and files within the containers, the curved shape having a geometry and location according to the determined visual arrangement. A viewpoint is then established for the curved shape which is substantially radial thereto and allows viewing from a root container of the file structure towards one or more child containers of the file structure. The curved shape is then rendered, relative to the viewpoint, to a display. Desirably, the files within a container are represented as a tower in the curved shape.

### SUMMARY OF THE INVENTION

To address the above-discussed deficiencies of the prior art, it is a primary object to provide a method, apparatus, and software for displaying data objects.

According to an aspect of the present invention, there is provided a method of displaying data objects as defined by claim 1.

The arranging of the data objects into groups may be performed by using metadata associated with the data objects.

The method may further include changing a sorting option of the data objects according to a sorting option change instruction.

The method may further include displaying data objects filtered by a selected sorting option.

The method may further include changing data objects being displayed on the display unit according to a shift instruction to move in at least one direction from among an up-down, a left-right, and a diagonal direction.

The data objects may include at least one of image-based data objects and text-based data objects.

The arranging of data objects into groups may be performed based on data objects that are being displayed on the display unit.

According to another aspect of the invention, a computer readable storage medium having a computer program embodied thereon may be provided for performing the method.

Another aspect of the invention provides an apparatus for displaying data objects, as defined by claim 8.

The storage unit may store metadata associated with the plurality of data objects, and the processor may use the metadata to arrange the data objects into groups.

The processor may change a sorting option of data objects, when receiving a sorting option change instruction from the input unit.

Further aspects of the invention are outlined in the dependent claims. Embodiments which do not fall within the scope of the claims do not describe part of the present invention.

The processor may filter the data objects stored in the storage unit based on a sorting option selected via the input unit, and display the resulting data objects on the display unit.

The processor may group the plurality of data objects based on the plurality of data objects displayed on the display unit.

The processor may change data objects being displayed on the display unit when receiving a shift instruction in at least one direction from an up-down, a left-right, and a diagonal direction.

The data objects may comprise at least one from among image-based data objects and text-based data objects.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIGURE 1 illustrates an example apparatus for displaying data objects according to an embodiment of the present invention;
FIGURE 2 illustrates an example flowchart of a method for displaying data objects according to an embodiment of the present invention;
FIGURE 3A illustrates an example screen displaying a result of grouping data objects, according to an embodiment of the present invention;
FIGURES 3B to 3D illustrate screens displaying results of zooming out the screen of FIGURE 3A;
FIGURES 4A and 4B illustrate arrangements of data objects according to an embodiment of the present invention;
FIGURES 5A through 5D illustrate screens displaying results of zooming out the data objects as arranged in FIGURE 4A, according to an embodiment of the present invention;
FIGURES 6A through 6D illustrates screens displaying a process of changing sorting options in response to a sorting option change instruction according to an embodiment of the present invention;
FIGURES 7A through 7C illustrate screens displaying a process of filtering data objects based on a search option according to an embodiment of the present invention; and
FIGURES 8A and 8B illustrate screens displaying a process of filtering data objects based on a sorting option according to an embodiment of the present invention.

### DETAILED DESCRIPTION OF THE INVENTION

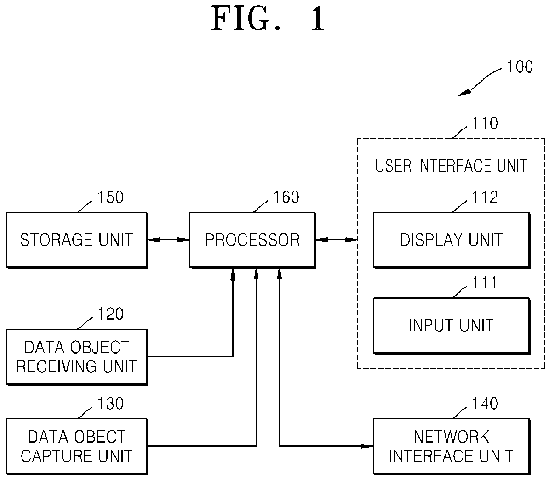

FIGURES 1 through 8B, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged display devices.

FIGURE 1 illustrates an example apparatus 100 for displaying data objects according to an embodiment of the present invention. The apparatus 100 may be a user device, such as a digital camera, a digital photo frame, a computer capable of being connected to a wired or wireless network, a mobile device, or an internet protocol TV (IPTV). The mobile device may be any type of portable device, such as, a cell phone, a smart phone, a personal digital assistant (PDA), a portable multimedia player (PMP), a navigation device, or a game console. In certain embodiments, the IPTV may be integrated in the mobile device, and may be used as a terminal for displaying imagery from a digital broadcast signal.

The apparatus 100 includes a user interface unit 110, a data object receiving unit 120, a data object capture unit 130, a network interface 140, a storage unit 150, and a processor 160. It should be understood that the apparatus 100 may be implemented with more or less elements than shown in FIGURE 1. For example, the apparatus 100 may optionally include the data object receiving unit 120, the data object capture unit 130, and the network interface unit 140. In certain embodiments, the storage unit 130 may be integrally formed in the processor 120.

The user interface unit 110 includes an input unit 111 and a display unit 112. A user may input information, commands, or data via the input unit 111. Signals transmitted from the input unit 111 to the processor 160 may be referred to as input information, input commands, input signals, or input data. The input unit 111 may be configured for a touch-based input. Specifically, the input unit 111 may be implemented as a touch-based interface using a touch panel or a touch screen that generates input signals by contacting predetermined positions of the touch panel or the touch screen with a stylus pen or a finger of the user. The input unit 111 and the display unit 112 together may form a combined unit.

The display unit 112 may display at least one data object. Data objects may include, but are not limited to, image-based data objects, such as still images, moving pictures, and text-based data objects. The data objects may be referred to as files. That is, the data objects may be referred to as image files or text files. Image and text files may be called image-based and text-based files, respectively.

The display unit 112 may display data objects based on a two-dimensional lattice structure. The display unit 112 may be implemented with a liquid crystal display (LCD), a thin film transistor-liquid crystal display (TFT LCD), organic light-emitting diodes, a flexible display, a three dimensional (3D) display, active-matrix organic light-emitting diodes (AMOLEDs), and the like. The display unit 112 may be referred to as an output unit.

The data object receiving unit 120 may be configured to receive data objects from an external device (not shown) via an element, such as a universal serial bus (USB) connector. The external device is a device that may provide data objects, which may be a digital camera, a storage medium, such as a USB memory and a hard disk, a personal computer (PC), or a mobile device as described above.

The data object capture unit 130 may be configured to obtain or capture data objects through an element such as a camera module. Thus, the data object capture unit 130 may be referred to as a photography unit or the data object obtaining unit.

The network interface unit 140 may be configured to interface with a wired or wireless network.

The storage unit 150 may store application programs comprising a set of executable instructions and associated data for performing a method of displaying data objects according to an embodiment of the present invention. The data stored in the storage unit 150 may include at least one data object and at least one metadata associated with the at least one data object. The application programs that are stored in the storage unit 150 may be written thereto in any suitable manner, such as during manufacture, or by downloading the application programs through the network interface unit 140.

The processor 160 for controlling overall functions of the apparatus 100 may be defined as, but is not limited to, a controller or a microprocessor. The processor 160 may instruct the display unit 112 to display data objects stored in the storage unit 150, or store data objects received from at least one from among the data object receiving unit 120, the data object capture unit 130, and the network interface unit 140 in the storage unit 150, and display the data objects stored in the storage unit 150 according to information input by the input unit 111 of the user interface unit 110.

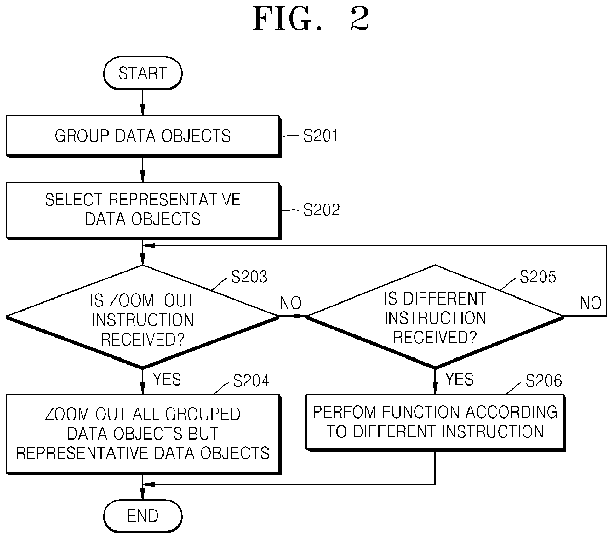

FIGURE 2 illustrates an example method for displaying data objects according to an embodiment of the present invention. In operation S201, the processor 160 arranges data objects to be displayed on the display unit 112 that are stored in the storage unit 150 into groups. The grouping of data objects may be performed based on metadata associated with the data objects. The metadata may include information, such as, date, time, place, and people associated with the creation of the data objects. Thus, the processor 160 may group the data objects based on the information in the metadata. The metadata that is used to group the data objects may be selected through the input unit 111.

Meanwhile, if an instruction different from the zoom-out instruction is received from the input unit 111, the processor 160 operates accordingly, in response to the received instruction, in operations S205 and S206.

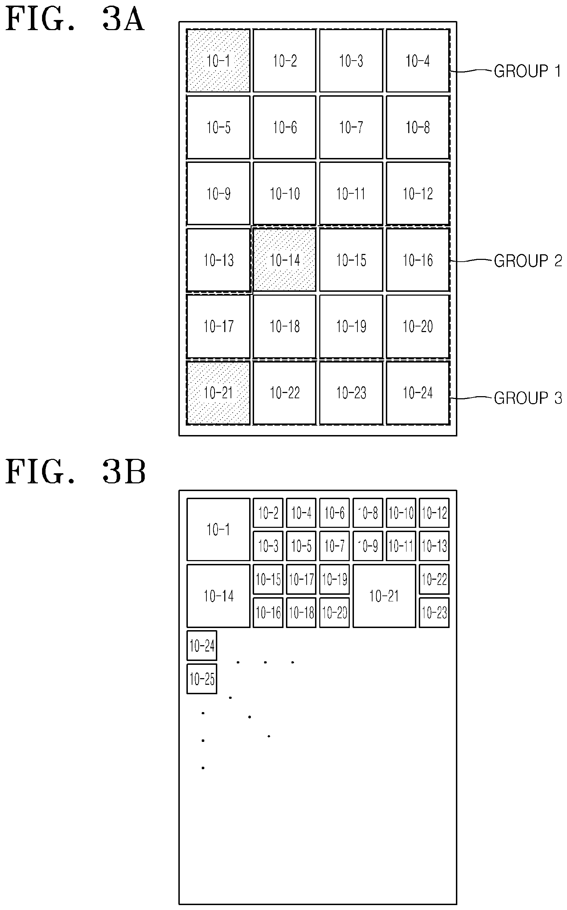

FIGURE 3A illustrates an example screen displaying a result of grouping data objects, according to an embodiment of the present invention, while FIGURES 3B to 3D illustrate screens displaying results of zooming out the screen of FIGURE 3A. In certain embodiments, the processor 160 may also group the data objects based on data objects currently displayed on the display unit 112. That is, the processor 160 may display data objects in the order that the data objects were stored in the storage unit 150. If an area (or a block) is established for displaying data objects on the display unit 112 (See FIGURE 3A) by a drag operation over the display unit 112 through the input unit 111, the processor 160 may group the data objects contained in the established area into a group. FIGURE 3A illustrates a screen for explaining about grouping of data objects, in a method of displaying data objects according to an embodiment of the present invention. When data objects are selected by touch or with a special key (e.g., shift key) through the input unit 111, the processor 160 may group the selected data objects. Such touch-based or special key-based selection of data objects may be randomly performed.

The processor 160 selects a representative data object from a group of data objects (hereinafter, data object group), in operation S202. If information or a signal for selecting the representative data object is not entered via the input unit 111, the processor 160 may select a first data object from the data object group as the representative data object of the data object group. Otherwise, if information or a signal for selecting the representative data object is entered via the input unit 111, the processor 160 determines the data object selected according to the information or the signal as the representative data object of the data object group. In this case, if a data object that is selected as the representative data object does not correspond to the first data object of the data object group, the processor 160 may change the display position of the data object selected as the representative data object to position first over the other data objects of the data object group.

After all the representative data objects are selected from all the data object groups, upon receiving a zoom-out instruction from the input unit 111, the processor 160 changes a screen as illustrated in FIGURE 3A into a screen as illustrated in FIGURE 3B, in operations S203 and S204.

In the screen of FIGURE 3B, all data objects except for the representative data objects of the respective data object groups are reduced in sized in both a vertical and horizontal dimension.

It can be seen in FIGURES 3A and 3B that the data objects represented as 10-1, 10-14, and 10-21 are the representative data objects of their respective data object groups. Some of the data objects displayed in FIGURE 3A are omitted in FIGURE 3B. However, it should be understood that if there are more data objects than what are presented in FIGURE 3A, more data objects can be displayed according to the zoom-out instruction, as illustrated in FIGURE 3B. In other words, the zoom-out instruction allows more display data objects to be displayed on the screen while maintaining the representative data objects in their original sizes, which in some embodiments, may enable a user to easily and quickly identify a desired data object based on the representative data objects.

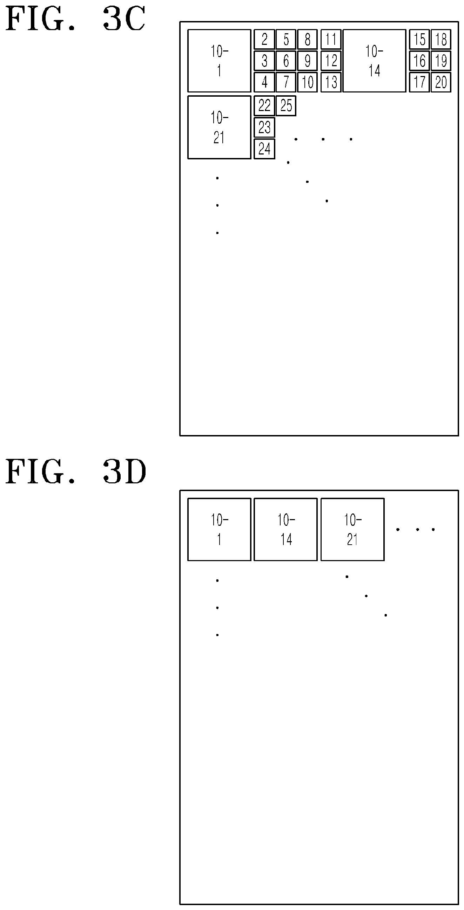

When data objects are displayed as illustrated in FIGURE 3B, upon receiving another zoom-out instruction, the processor 160 changes the screen of the display unit 112 from FIGURE 3B to FIGURE 3C. In the screen of FIGURE 3C, the representative data objects are displayed in their original sizes while the remaining data objects of the data object groups are further reduced from their original sizes in both a vertical and a horizontal dimension.

When data objects are displayed as illustrated in FIGURE 3C, upon receiving another zoom-out instruction, the processor 160 may change the screen of the display unit 112 from FIGURE 3C to FIGURE 3D. In the screen of FIGURE 3D, only the representative data objects of the data object groups are displayed, which may be determined by the fact that further reduction of data objects except for the representative data objects to smaller sizes than what are shown in FIGURE 3C may lead to a difficulty in identifying the data objects. It should be understood that the reduction ratios in response to the zoom-out instruction should not be limited to the example FIGURES described above.

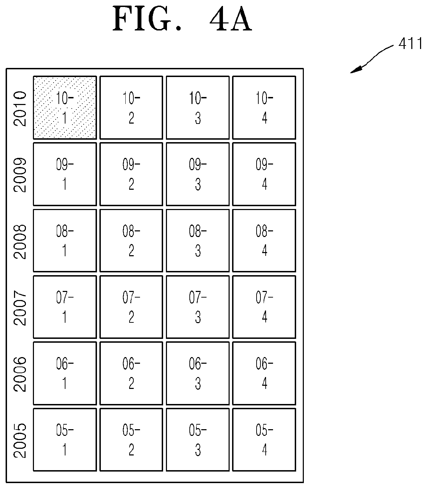

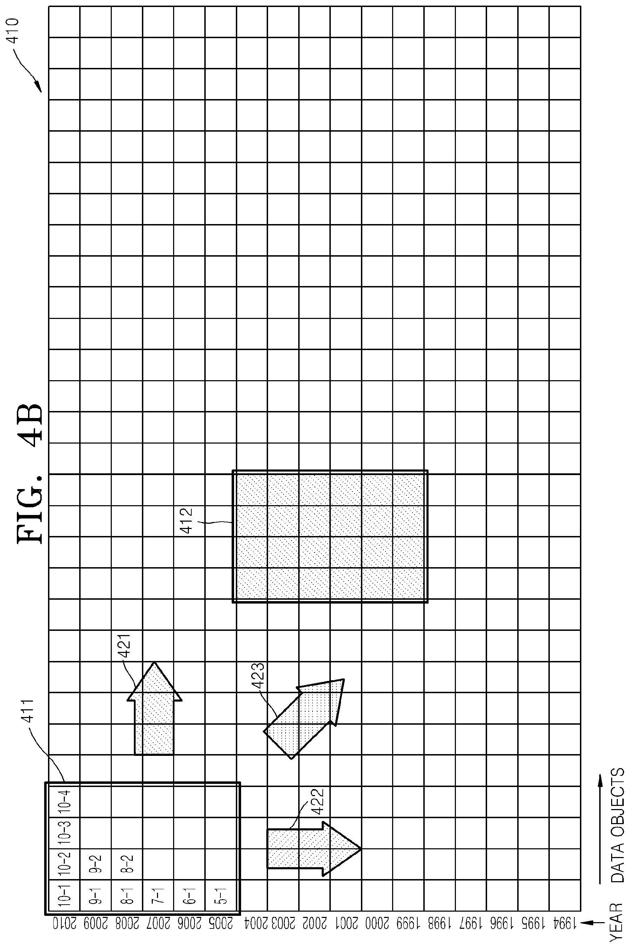

FIGURES 4A and 4B illustrate arrangements of data objects, in a method of displaying data objects, according to an embodiment of the present invention. If data objects are arranged or sorted by year and displayed on the display unit 112 as illustrated in FIGURE 4A, data objects stored in the storage unit 150 may be defined as arranged or sorted in a two-dimensional (2D) lattice structure, as shown in 410 of FIGURE 4B. If data objects stored in storage unit 150 are arranged as shown in 410 of FIGURE 4B, upon receiving a shift instruction in at least one direction from among a left-right direction 421, an up-down direction 422, and a diagonal direction 423, the processor 160 may change data objects being displayed on the display unit 112 based on the shift instruction. For example, when displaying the screen 411 on the display unit 112, the processor 160 can change the screen 411 to screen 412 according to the received shift instruction. Data objects displayed on the screen 411 are the same as those in FIGURE 4A. Data objects that are displayed may vary according to a shift direction. While changing the display of data objects on the display unit 112 based on the shift instruction, the processor 160 may arrange data objects into groups as described in operation S201 of FIGURE 2 and select representative data objects from data object groups as in operation S202 of FIGURE 2.

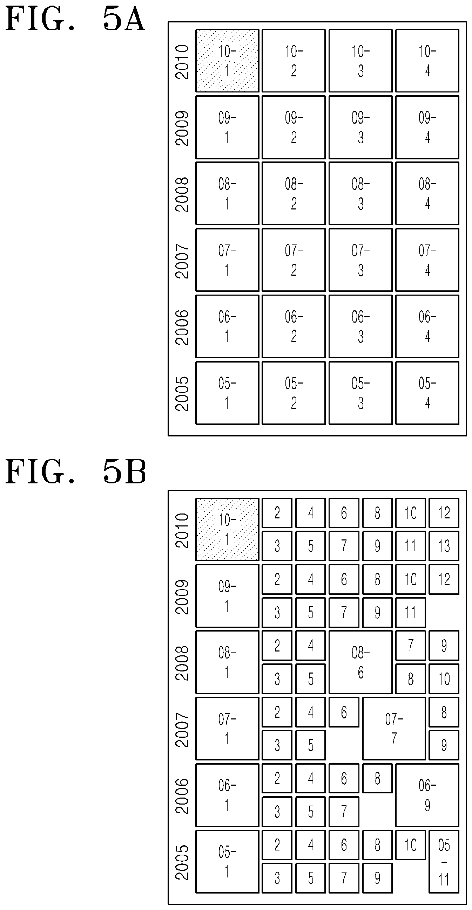

FIGURES 5A through 5D illustrate screens displaying results of zooming out the data objects as arranged in FIGURE 4A, according to an embodiment of the present invention. After a representative data object is selected from among data objects arranged as in FIGURE 4A, upon receiving a zoom-out instruction, the processor 160 may change the screen of the display unit 112 from FIG 5A to FIGURE 5B. In the screen of FIGURE 5A, data objects are arranged in the same way as in FIGURE 4A. FIGURE 5B, however, illustrates a screen displaying the representative data objects in their original sizes and the remaining data objects of the data object groups reduced, which in this particular example by a half both vertically and horizontally in a similar manner as also illustrated in FIGURE 3B.

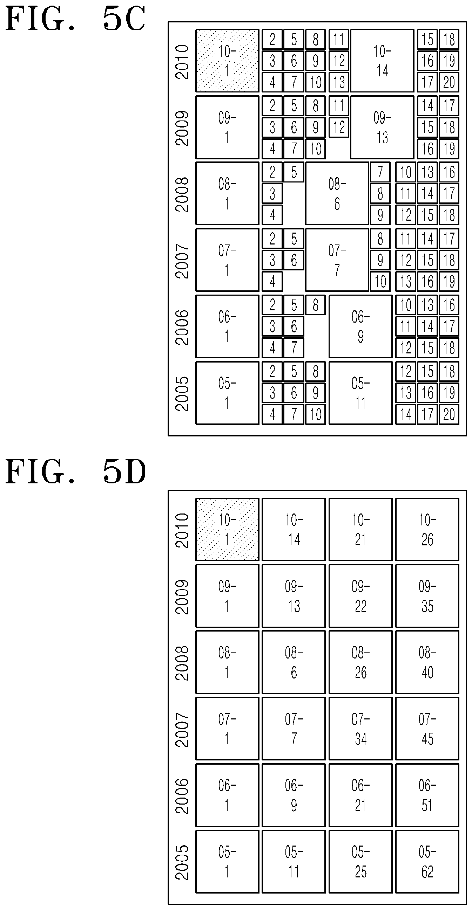

While the screen is being displayed as in FIGURE 5B, upon receiving another zoom-out instruction via the input unit 111, the processor 160 may change the screen of FIGURE 5B into a screen of FIGURE 5C. FIGURE 5C illustrates a screen displaying the representative data objects in their original sizes and the remaining data objects of the data object groups reduced, which in this particular example by one-third of their original sizes both vertically and horizontally. Upon receiving another zoom-out instruction through the input unit 111 while displaying the screen as in FIGURE 5C, the processor 160 may change the screen from FIGURE 5C to FIGURE 5D. FIGURE 5D illustrates a screen displaying only the representative data objects of the data object groups in a similar manner as shown in FIGURE 3D. FIGURES 5A through 5D are examples of screens displaying data objects zoomed out of the data objects arranged or sorted as shown in FIGURE 4A.

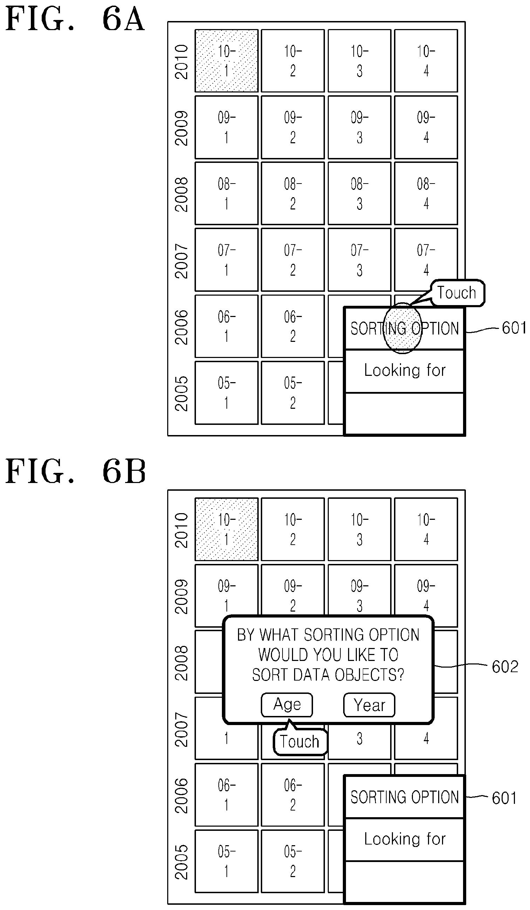

FIGURES 6A through 6D illustrate screens displaying a process of changing sorting options according to a sorting option change instruction, in a method of displaying data objects according to an embodiment of the present invention.

For example, if the received instruction is a sorting option change instruction to change a sorting option based on which data objects are displayed, which may be inputted by touching an area of the sorting option on a popup menu 601, the processor 160 may display a questionnaire, query, or message window 602 on the display unit 112. For example, the processor 160 may display a question such as "by what option would you like to sort data objects?" with selectable options, as shown in FIGURE 6B are "age" and "year." The sorting option may be referred to as sorting criteria information, sorting conditional information, or a sorting keyword. The sorting option change instruction may be referred to as a sorting option setting instruction or sorting option selection instruction. The questionnaire or query or message window 602 may be superimposed over the displayed data objects. In certain embodiments, the sorting option change instruction may be inputted through a separate menu or a dedicated key. It should also be noted that the content of the questionnaire, query, or message window 602 is not limited to the present example.

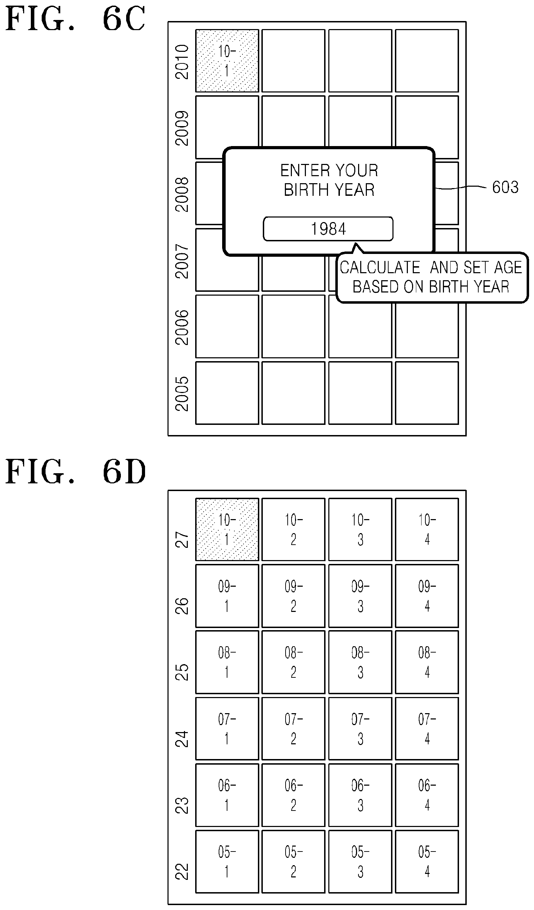

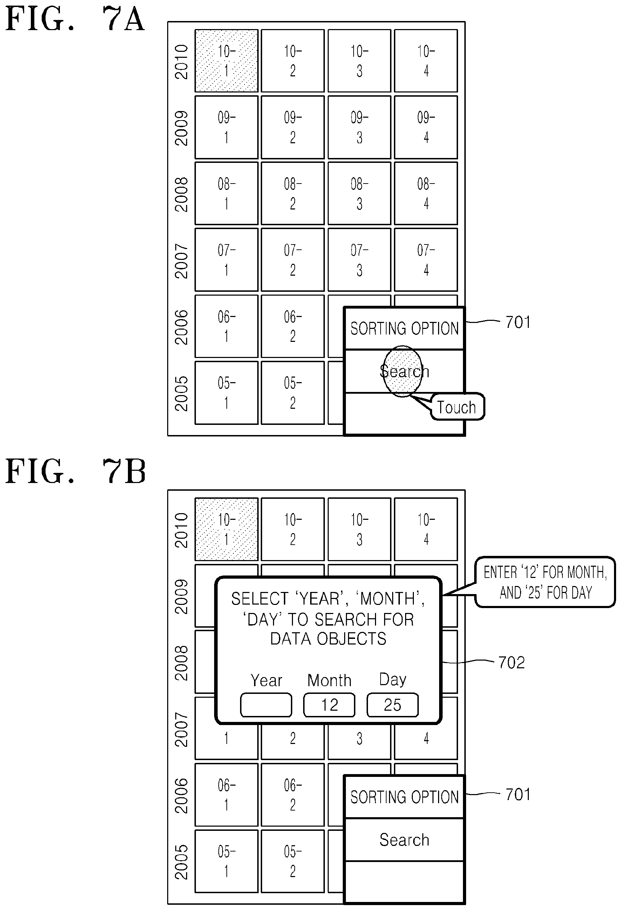

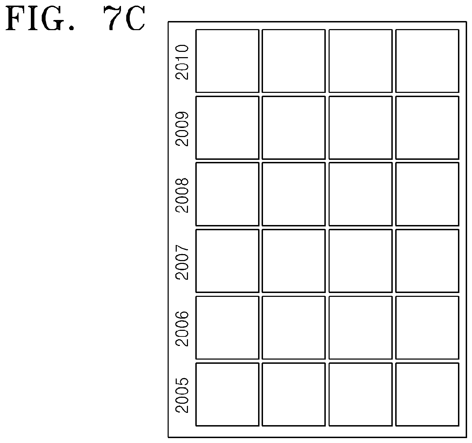

Upon receiving a signal through the input unit 111 that is equivalent to a selection of the option "age" based on the questionnaire, query, or message window 602, the processor 160 changes the screen as displayed in FIGURE 6B into a screen as in FIGURE 6C, and displays an input window 603 for inputting a birth year. If a user inputs his/her birth year in the input window 603, the processor 160 calculates the age of the user based on the input birth year, and displays a screen as shown in FIGURE 6D on which data objects sorted by age translated from the birth year are displayed. If the data objects are photo images, the user can see photos sorted with respect to his/her age. Therefore, the method of displaying data objects can be used to manage photos in a life story album or an electronic album. FIGURES 7A through 7C illustrate screens displaying a process of filtering data objects based on a search option according to an embodiment of the present invention. For example, if the received instruction is a search option change instruction using a popup menu 701 as shown in FIGURE 7A, the processor 160 may output on the display unit 112 a questionnaire, query, or message window 702 including a message that prompts a user to select a year, month, and day associated with data objects to be searched for, as shown in FIGURE 7B. The search option may be referred to as search criteria information, search conditional information, or a search keyword. The search option change instruction may be referred to as a search option setting instruction or a search option selection instruction. The message window 702 may be superimposed over the data objects displayed on the display unit 112. For example, if "December 25^{th}" is entered through the message window 702, the processor 160 searches the storage unit 150 only for data objects associated with the date of "December 25th." The search may be conducted by using metadata associated with the data objects. Based on the search results, the processor 160 may change the screen from FIGURE 7B to FIGURE 7C. FIGURE 7C is an example of a screen on which data objects only captured on "December 25^{th}" of every year are displayed. The processor 160 may change the screen of FIGURE 7B into a screen on which the data objects captured on "December 25^{th}" every year are arranged sequentially without information about the years unlike the screen of FIGURE 7C. In certain embodiments, the search option may be referred to as conditional information.

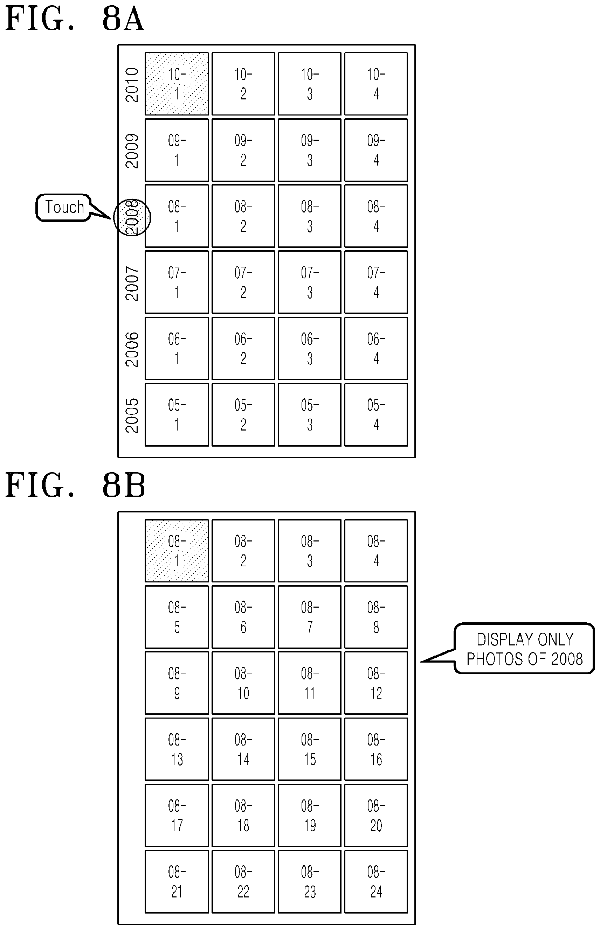

FIGURES 8A and 8B illustrate screens displaying a process of filtering data objects based on a sorting option according to an embodiment of the present invention. As illustrated in FIGURE 8A, if the received instruction indicates selection of a sorting option by touching or clicking a certain year (e.g., 2008) on the screen displaying data objects sorted by year, the processor 160 may use the selected sorting option which in this case is a certain year as a filtering condition to filter and display data objects stored in the storage unit 150. Hence, the screen being displayed on the display unit 112 may be changed from FIGURE 8A to FIGURE 8B. In the screen of FIGURE 8B, data objects only captured in the selected year are displayed. It should be noted that sorting options are not limited to year, month, day, etc., as described above. For example, sorting options may be specified according to people or places.

A program for carrying out a method of displaying data objects according to an embodiment of the present invention may be implemented as computer readable codes on a computer readable storage medium. Examples of the computer readable storage medium include any suitable type of storage devices that can be read by a computer system. The computer readable storage medium includes, for example, a read only memory (ROM), a random access memory (RAM), a compact disk-ROM (CD-ROM), a magnetic tape, a floppy disk, an optical data storage device, and so on. The computer readable storage medium can also be distributed among computer systems that are interconnected through a network, and the present invention may be stored and implemented as computer readable program codes.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method of displaying data objects on a display (112) of an apparatus (100) comprising a processor (160), the method comprising:
classifying (s201) by the processor (160) a plurality of data objects into groups;
displaying the data objects classified into groups arranged in a two-dimensional lattice structure;
selecting (s202), in each group, a representative data object among the data objects classified into the group according to a received input signal from a user; and
whenever a zoom-out instruction is received (s203), displaying (s204) the representative data object of each group distinctively from non-representative data objects in each group by reducing a display size of all displayed data objects within the group except for the representative data object.

2. The method of claim 1, wherein the classifying the plurality of data objects into groups is performed by using metadata associated with the data objects.

3. The method of claim 1 or 2, further comprising changing a sorting option of the data objects according to a sorting option change instruction.

4. The method of claim 1 or 2, further comprising displaying data objects that are filtered by a selected sorting option.

5. The method of claim 1 or 2, further comprising changing data objects being displayed on the display (112) according to a shift instruction to move in at least one direction from among an up-down, a left-right, and a diagonal direction.

6. The method of claim 1 or 2, wherein the selecting representative data object comprises, if no input signal is received, selecting a first data object of the data object group as the representative data object.

7. A computer readable storage medium having a computer program embodied thereon for performing the method of claim 1.

8. An apparatus (100) for displaying data objects, the apparatus (100) comprising:
a touch screen (110) configured to display at least one data object and to receive an input signal from a user including at least one of an instruction and information;
a memory (150) configured to store a plurality of the data objects;
a processor (160) operable to:
classify (s201) the plurality of data objects stored in the memory (150) into groups;
cause the touch screen (110) to display the data objects classified into groups arranged in a two-dimensional lattice structure;
select (202), in each group, a representative data object among the data objects classified into the group according to a received input signal from a user or according to an order of the data objects; and
whenever a zoom-out instruction is received(s203), display (s204) the representative data object of each group distinctively from non-representative data object in each group by reducing a display size of all displayed data objects within the group except for the representative data object.

9. The apparatus (100) of claim 8, wherein the memory (150) is further configured to store metadata associated with the plurality of data objects, and
the processor (160) is configured to classify the data objects into group according to the metadata.

10. The apparatus (100) of claim 8 or 9, wherein the processor (160) is configured to change a sorting option of data objects in response to receipt of a sorting option change instruction from the touch screen (110).

11. The apparatus (100) of claim 8 or 9, wherein the processor (160) is configured to:
filter the data objects stored in the memory (150) based on a sorting option selected via the touch screen (110); and
display the resulting data objects on the touch screen (110).

12. The apparatus (100) of claim 8 or 9, wherein the processor (160) is configured to:
change data objects being displayed on the touch screen (110) in response to receipt of a shift instruction in at least one direction from among an up-down, a left-right, and a diagonal direction.

13. The apparatus of claim 8 or 9, wherein the processor (160) is configured to, if no input signal is received, select a first data object of the data object group as the representative data object.

## Patentansprüche

1. Verfahren zum Anzeigen von Datenobjekten auf einer Anzeige (112) einer Vorrichtung (100), die einen Prozessor (160) umfasst, wobei das Verfahren folgendes umfasst:
Klassifizieren (s201) einer Mehrzahl von Datenobjekten in Gruppen durch den Prozessor (160);
Anzeigen der in Gruppen klassifizierten Datenobjekte, die in einer zweidimensionalen Gitterstruktur angeordnet sind;
in jeder Gruppe, Auswählen (s202) eines repräsentativen Datenobjekts aus den in der Gruppe klassifizierten Datenobjekten gemäß einem empfangenen Eingangssignal von einem Benutzer; und
immer, wenn ein Verkleinerungsbefehl empfangen wird (s203), Anzeigen (s204) des repräsentativen Datenobjekts jeder Gruppe unterscheidbar von nicht repräsentativen Datenobjekten in jeder Gruppe durch Reduzierung einer Anzeigegröße aller angezeigten Datenobjekte in der Gruppe mit Ausnahme des repräsentativen Datenobjekts.

2. Verfahren nach Anspruch 1, wobei das Klassifizieren der Mehrzahl von Datenobjekten in Gruppen unter Verwendung von Metadaten ausgeführt wird, die den Datenobjekten zugeordnet sind.

3. Verfahren nach Anspruch 1 oder 2, ferner umfassend das Ändern einer Sortierungsoption der Datenobjekte gemäß einem Sortierungsoptionsänderungsbefehl.

4. Verfahren nach Anspruch 1 oder 2, ferner umfassend das Anzeigen von Datenobjekten, die durch eine ausgewählte Sortierungsoption gefiltert werden.

5. Verfahren nach Anspruch 1 oder 2, ferner umfassend das Ändern der auf der Anzeige (112) angezeigten Datenobjekte gemäß einem Verschiebungsbefehl zur Bewegung in mindestens eine Richtung der Richtungen hoch-runter, links-rechts und diagonal.

6. Verfahren nach Anspruch 1 oder 2, wobei das Auswählen des repräsentativen Datenobjekts, wenn kein Eingangssignal empfangen wird, das Auswählen eines ersten Datenobjekts der Datenobjektgruppe als das repräsentative Datenobjekt umfasst.

7. Computerlesbares Speichermedium mit einem darauf ausgeführten Computerprogramm zum Ausführen des Verfahrens nach Anspruch 1.

8. Vorrichtung (100) zum Anzeigen von Datenobjekten, wobei die Vorrichtung (100) folgendes umfasst:
einen Touchscreen (110), der so gestaltet ist, dass er mindestens ein Datenobjekt anzeigt und ein Eingangssignal von einem Benutzer empfängt, das mindestens einen Befehl oder Informationen enthält;
einen Speicher (150), der so gestaltet ist, dass er eine Mehrzahl von Datenobjekten speichert;
einen Prozessor (160), der für folgende Zwecke betriebsfähig ist:
Klassifizieren (s201) der in dem Speicher (150) gespeicherten Mehrzahl von Datenobjekten in Gruppen;
Bewirken, dass der Touchscreen (110) die in Gruppen klassifizierten Datenobjekte anzeigt, die in einer zweidimensionalen Gitterstruktur angeordnet sind;
in jeder Gruppe, Auswählen (202) eines repräsentativen Datenobjekts aus den in der Gruppe klassifizierten Datenobjekten gemäß einem empfangenen Eingangssignal von einem Benutzer oder gemäß einer Anordnung der Datenobjekte; und
immer, wenn ein Verkleinerungsbefehl empfangen wird (s203), Anzeigen (s204) des repräsentativen Datenobjekts jeder Gruppe unterscheidbar von nicht repräsentativen Datenobjekten in jeder Gruppe durch Reduzierung einer Anzeigegröße aller angezeigten Datenobjekte in der Gruppe mit Ausnahme des repräsentativen Datenobjekts.

9. Vorrichtung (100) nach Anspruch 8, wobei der Speicher (150) ferner so gestaltet ist, dass er der Mehrzahl von Datenobjekten zugeordnete Metadaten speichert; und
wobei der Prozessor (160) so gestaltet ist, dass er die Datenobjekte gemäß den Metadaten in Gruppen klassifiziert.

10. Vorrichtung (100) nach Anspruch 8 oder 9, wobei der Prozessor (160) so gestaltet ist, dass er eine Sortierungsoption der Datenobjekte als Reaktion auf den Empfang eines Sortierungsoptionsänderungsbefehls von dem Touchscreen (110) ändert.

11. Vorrichtung (100) nach Anspruch 8 oder 9, wobei der Prozessor (160) für folgende Zwecke gestaltet ist:
Filtern der in dem Speicher (150) gespeicherten Datenobjekte auf der Basis einer über den Touchscreen (110) ausgewählten Sortierungsoption; und
Anzeigen der resultierenden Datenobjekte auf dem Touchscreen (110).

12. Vorrichtung (100) nach Anspruch 8 oder 9, wobei der Prozessor (160) für folgenden Zweck gestaltet ist:
Ändern der auf dem Touchscreen (110) angezeigten Datenobjekte als Reaktion auf den Empfang eines Verschiebungsbefehls in mindestens eine Richtung der Richtungen hoch-runter, links-rechts und diagonal.

13. Vorrichtung nach Anspruch 8 oder 9, wobei der Prozessor (160) so gestaltet ist, dass er, wenn kein Eingangssignal empfangen wird, ein erstes Datenobjekt der Datenobjektgruppe als repräsentatives Datenobjekt auswählt.

## Revendications

1. Procédé d'affichage d'objets de données sur un écran (112) d'un appareil (100) comprenant un processeur (160), le procédé comprenant les étapes :
classement (s201) par le processeur (160) d'une pluralité d'objets de données dans des groupes ;
affichage des objets de données classés dans des groupes disposés dans une structure en treillis bidimensionnelle ;
sélection (s202), dans chaque groupe, d'un objet de données représentatif parmi les objets de données classés dans le groupe selon un signal d'entrée reçu d'un utilisateur ; et
chaque fois qu'une instruction de zoom arrière est reçue (s203), affichage (s204) de l'objet de données représentatif de chaque groupe séparément des objets de données non représentatifs dans chaque groupe en réduisant la taille d'affichage de tous les objets de données affichés dans le groupe excepté pour l'objet de données représentatif.

2. Procédé selon la revendication 1, le classement de la pluralité d'objets de données dans des groupes étant effectuée à l'aide de métadonnées associées aux objets de données.

3. Procédé selon la revendication 1 ou 2, comprenant en outre la modification d'une option de tri des objets de données selon une instruction de modification d'option de tri.

4. Procédé selon la revendication 1 ou 2, comprenant en outre l'affichage d'objets de données qui sont filtrés par une option de tri sélectionnée.

5. Procédé selon la revendication 1 ou 2, comprenant en outre la modification d'objets de données affichés sur l'affichage (112) selon une instruction de décalage pour se déplacer dans au moins une direction parmi une direction de haut en bas, une direction de gauche à droite et une direction diagonale.

6. Procédé selon la revendication 1 ou 2, la sélection de l'objet de données représentatif comprenant, si aucun signal d'entrée n'est reçu, la sélection d'un premier objet de données du groupe d'objets de données comme objet de données représentatif.

7. Support de stockage lisible par ordinateur sur lequel est incorporé un programme d'ordinateur pour exécuter le procédé selon la revendication 1.

8. Appareil (100) permettant d'afficher des objets de données, l'appareil (100) comprenant :
un écran tactile (110) conçu pour afficher au moins un objet de données et pour recevoir un signal d'entrée d'un utilisateur comprenant au moins une instruction et une information ;
une mémoire (150) conçue pour stocker une pluralité des objets de données ;
un processeur (160) permettant de :
classer (s201) la pluralité d'objets de données stockés dans la mémoire (150) dans des groupes ;
amener l'écran tactile (110) à afficher les objets de données classés dans des groupes disposés dans une structure en treillis bidimensionnelle ;
sélectionner (202), dans chaque groupe, un objet de données représentatif parmi les objets de données classés dans le groupe selon un signal d'entrée reçu d'un utilisateur ou selon un ordre des objets de données ; et
chaque fois qu'une instruction de zoom arrière est reçue (s203), afficher (s204) l'objet de données représentatif de chaque groupe distinctement de l'objet de données non représentatif dans chaque groupe en réduisant une taille d'affichage de tous les objets de données affichés dans le groupe excepté pour l'objet de données représentatif.

9. Appareil (100) selon la revendication 8, la mémoire (150) étant en outre conçue pour stocker des métadonnées associées à la pluralité d'objets de données, et
le processeur (160) étant conçu pour classer les objets de données dans un groupe selon les métadonnées.

10. Appareil (100) selon la revendication 8 ou 9, le processeur (160) étant conçu pour modifier une option de tri d'objets de données en réponse à la réception d'une instruction de changement d'option de tri provenant de l'écran tactile (110).

11. Appareil (100) selon la revendication 8 ou 9, le processeur (160) étant conçu pour :
filtrer les objets de données stockés dans la mémoire (150) en fonction d'une option de tri sélectionnée par l'intermédiaire de l'écran tactile (110) ; et
afficher les objets de données résultants sur l'écran tactile (110).

12. Appareil (100) selon la revendication 8 ou 9, le processeur (160) étant conçu pour :
modifier les objets de données affichés sur l'écran tactile (110) en réponse à la réception d'une instruction de décalage dans au moins une direction parmi une direction de bas en haut, une direction de gauche à droite et une direction diagonale.

13. Appareil selon la revendication 8 ou 9, le processeur (160) étant conçu pour, si aucun signal d'entrée n'est reçu, sélectionner un premier objet de données du groupe d'objets de données comme objet de données représentatif.
